(19) Europäisches Patentamt
European Patent Office
Office européen des brevets

(11) **EP 1 739 676 A1**

(12) **EUROPEAN PATENT APPLICATION**

(43) Date of publication:
**03.01.2007 Bulletin 2007/01**

(51) Int Cl.:
*G11B 27/00* (2006.01)        *H04H 1/00* (2006.01)

(21) Application number: **06253269.2**

(22) Date of filing: **23.06.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **29.06.2005 JP 2005189157**<br>**20.03.2006 JP 2006075861**<br><br>(71) Applicant: **HITACHI, LTD.**<br>**Chiyoda-ku**<br>**Tokyo 100-8280 (JP)** | (72) Inventors:<br>• **Ito, Tamotsu**<br>**c/o Hitachi, Ltd.**<br>**Chiyoda-ku, Tokyo 100-8220 (JP)**<br>• **Shimoda, Shinichi**<br>**c/o Hitachi, Ltd.**<br>**Chiyoda-ku, Tokyo 100-8220 (JP)**<br>• **Ito, Hideo**<br>**c/o Hitachi, Ltd.**<br>**Chiyoda-ku, Tokyo 100-8220 (JP)**<br><br>(74) Representative: **Hackney, Nigel John et al**<br>**Mewburn Ellis LLP**<br>**York House,**<br>**23 Kingsway**<br>**London WC2B 6HP (GB)** |

(54) **Digital broadcasting receiving device and digital information receiving device, and playback method**

(57) Digital broadcasting receiving device and digital information receiving device and playback method configured such that in the case where digital information containing an audio stream is received, when an instruction of pause of looking and listening of the digital information is inputted, received digital information is stored, and when an instruction of canceling the pause is inputted, while the digital information is stored, fast-forward playback of the stored digital information is performed with playback speed of the stored digital information being changed in several stages. In this configuration, when the playback speed of the stored digital information is changed, audio frames of the audio stream are decoded with a thinning level of the audio frames being changed.

**FIG.1**

**EP 1 739 676 A1**

**Description**

This application claims the benefit of priorityof Japanese Application No. 2005-189157 filed June 29, 2005 and Japanese Application No. 2006-75861 filed March 20, 2006, the disclosure of which also is entirely incorporated herein by reference.

TECHNICAL FIELD

The present invention relates to a digital broadcasting receiving device and a digital information receiving device, which have a recording function, and a playback method.

BACKGROUND

A digital broadcasting recording-and-playback device is disclosed in JP-A-2001-094948, in which video information of a received program is recorded and played back with respect to a recording medium. In the digital broadcasting recording-and-playback device, in the case that broadcasting time of a scene to be played back on a display device is delayed from current time due to pause by a user, when catch-up playback is instructed by the user, the broadcasting time is read out from the recording medium by TS (Transport Stream) indicating the scene and compared with current time given by a current time acquisition unit using a comparison unit. Playback speed is controlled by a playback speed control unit such that playback speed in fast-forward playback is close to playback speed in normal playback as the broadcasting time approaches the current time.

SUMMARY

Since a broadcasting program contains not only video information but also audio information, a request that the audio information is desired to be confirmed even in the fast-forward playback is given, in addition, in the case of change from fast-forward playback to current broadcasting, a sense of discomfort felt by a user at the boundary between them is required to be mitigated also for the audio information. For example, when audio frequency is abruptly changed, since the user feels the sense of discomfort, such a difficulty is necessary to be solved.

It is necessary to provide a digital broadcasting receiving device and a digital information receiving device, in which a fast-forward playback function can be improved, and a playback method.

One aspect of the invention is configured such that in the case where digital information containing an audio stream is received, when an instruction of pause of looking and listening of the digital information is inputted, received digital information is stored, and when an instruction of canceling the pause is inputted, while the digital information is stored, fast-forward playback of the stored digital information is performed with playback speed of the stored digital information being changed in several stages. In this aspect, when the playback speed of the stored digital information is changed, audio frames of the audio stream are decoded with a thinning level of the audio frames being changed.

BRIEF DESCRIPTION OF THE DRAWINGS

Embodiments of the present invention will be described in detail based on the following figures, wherein:

Fig. 1 is a block diagram showing an example of an internal configuration of a digital broadcasting receiving device;
Fig. 2 is a flowchart showing an example of digital broadcasting receiving processing in the digital broadcasting receiving device;
Fig. 3 is an explanatory drawing for illustrating a format of compressed video data;
Fig. 4 is an explanatory drawing for illustrating a principle for realizing fast-forward playback of an audio stream by increasing sampling frequency during playback;
Fig. 5 is an explanatory drawing for illustrating a principle for realizing fast-forward playback of an audio stream by thinning audio frames to be inputted into an audio decoding section;
Fig. 6 is a flowchart showing processing procedure of fast-forward playback of data that have been recorded while recording current broadcasting; and
Fig. 7 is a block diagram showing an example of an internal configuration of a digital broadcasting receiving device added with a function of changing sampling frequency.

DETAILED DESCRIPTION

An example of a digital broadcasting receiving device having a recording function is described using drawings.

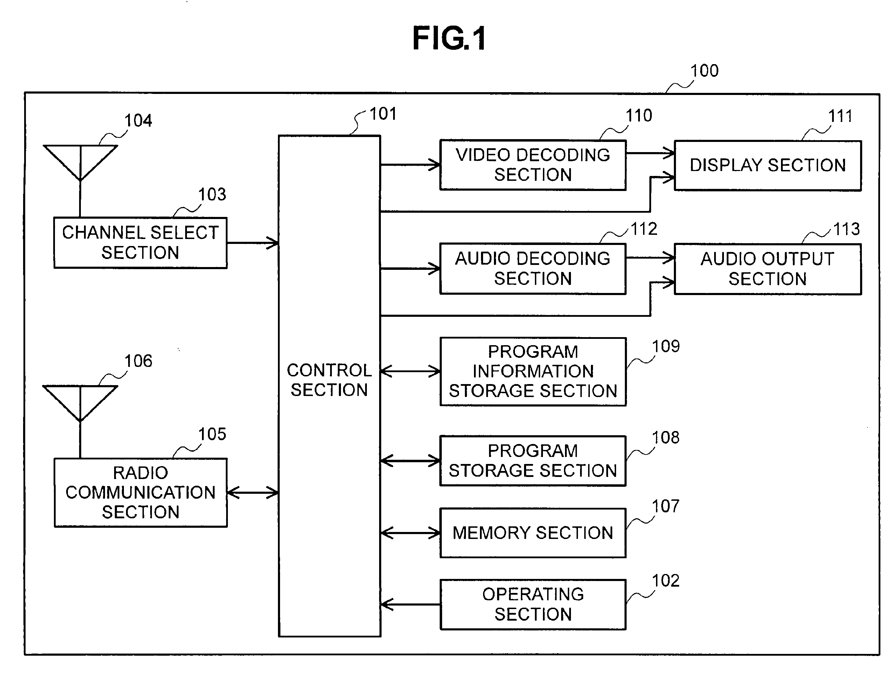

Fig. 1 is a block diagram showing an example of an internal configuration of a digital broadcasting receiving device 100 in a type of a mobile terminal. The device of the mobile terminal type is not limited to a device held by a user, and includes a device to be mounted in a car for in-vehicle application. In addition, while the device of the mobile terminal type is described hereinafter, the embodiments of the invention are not limited to this, and may be applied to a stationary device.

A control section 101 includes CPU (Central Processing Unit) and the like, and controls overall the digital broadcasting receiving device 100. An operational section 102 includes a plurality of keys including a number key and a function key, and receives an instruction from a user. In a stationary digital broadcasting receiving device, an infrared ray reception section may be provided to configure the operational section 102 with remote control.

A channel select section 103 is a tuner for selecting a channel of digital broadcasting, and demodulates received digital broadcasting via a broadcast reception antenna 104, and then outputs digital data. The demodulation includes error correction using an error-correction code contained in the broadcasting. A radio communication section 105 is a modem for performing radio communication in a CDMA (Code Division Multiple Access) method and the like via a transmission and reception antenna for communication 106.

A memory section 107 is a memory for storing an operation program of the control section 101 and the like. A program storage section 108 is a memory for recording and storing a received digital broadcasting program. A program information storage section 109 is a memory for storing program information such as EPG (Electric Program Guide) of a program to be recorded. The EPG may be transmitted through the digital broadcasting, or may be acquired via internet and the like by using a radio communication line network.

Each of the memory section 107, program storage section 108, and program information storage section 109 maybe a separate memory such as RAM (Random Access Memory), or the memory section 107, storage section 108 and the like may be provided in a memory. Alternatively, a removable, external memory medium may be used. For example, the program storage section 108 may be configured by the external memory medium, and the memory section 107 and the like other than that may be configured by RAM. The program storage section 108 may be configured by the external memory medium, and a plurality of media can be exchanged to be used, thereby a large number of digital broadcasting program data can be stored.

A video decoding section 110 is a decoder for decoding compressed video data, and a display section 111 is a display such as a liquid crystal monitor for displaying a video image decoded by the video decoding section 110. An audio decoding section 112 is a decoder for decoding compressed audio data, and an audio output section 113 is a speaker for outputting an audio sound decoded by the audio decoding section 112. The display section 111 may be in a method of a touch panel in which a user can input a letter, a numeral, or user instruction by touching a screen of the display using a pen or a finger. Thus, the user properly uses the operational section 102 or the display section 111 depending on a use condition or information to be inputted. Alternatively, the user may use only the display section 111 and thus omit the operational section 102.

When the digital broadcasting is receivedvia the broadcast reception antenna 104 and the channel select section 103, it is temporally stored in the memory section 107. The temporally stored digital broadcasting data are separated into compressed video data and compressed audio data by the control section 101. The compressed video data are decoded by the video decoding section 110, and then displayed by the display section 111. The compressed audio data are decoded by the audio decoding section 112, and outputted as audio sound by the audio output section 113. When the digital broadcasting program is recorded, the digital broadcasting data are stored in the program storage section 108.

The digital data received via the transmission and reception antenna for communication 106 and the radio communication section 105 are temporally stored in the memory section 107. The temporally stored digital data are separated by the control section 101. In the case of characteristic data such as a mail, the data are displayed by the display section 111, and in the case of audio data such as a call, the data are outputted as audio sound by the audio output section 113. By control of the control section 101, data stored in the memory section 107 and the like are read out, and transmitted as digital data via the radio communication section 105 and the transmission and reception antenna for communication 106.

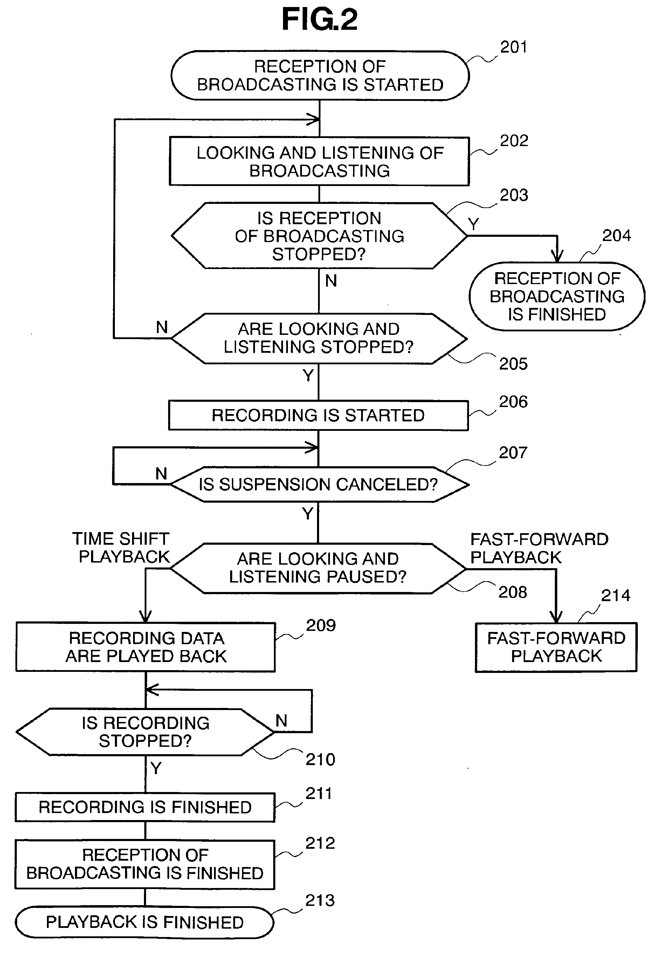

Fig. 2 is a flowchart showing an example of digital broadcasting reception processing in the digital broadcasting reception device 100. A program for executing the processing is stored in the memory section 107, and executed by the control section 101.

When reception of the digital broadcasting is started (step 201), video data are displayed on the display section 111, and audio data are outputted from the audio output section 113, and consequently the broadcasting is looked and listened (step 202). When a stop instruction is inputted during looking and listening of the broadcasting (step 203), the control section 101 performs processingof finishing reception of the broad casting (step204) .

The control section 101 detects whether a pause instruction is inputted or not (step 205). When looking and listening are paused during looking and listening of the broadcasting, recording is started (step 206), and data are sequentially recorded and stored in the program storage section 108. If looking and listening are neither stopped nor paused during the looking and listening of broadcasting, the looking and listening are continued.

During the pause, the control section 101 waits cancel of the pause (step 207). When cancel of the pause can be detected in the step 207, a mode of playback after the pause is determined (step 208). The digital broadcasting receiving device 100 has two modes of a time-shift playback mode where broadcasting data recorded at normal playback speed are played with constant time difference between current broadcasting and broadcasting data that are played, and a fast-forward playback mode where fast-forward playback of the recorded broadcasting data is performed such that the broadcasting data which are played catch up with the current broadcasting.

When the playback mode after the pause is the time-shift playback mode in the step 208, data that have been recorded are played while the current broadcasting is recorded (step 209). When looking and listening are stopped during looking and listening of playback data (step 210), the control section 101 finishes the recording (step 211), and then performs processing of finishing reception of the broadcasting (step 212), and then finishes the looking and listening of playback data (step 213).

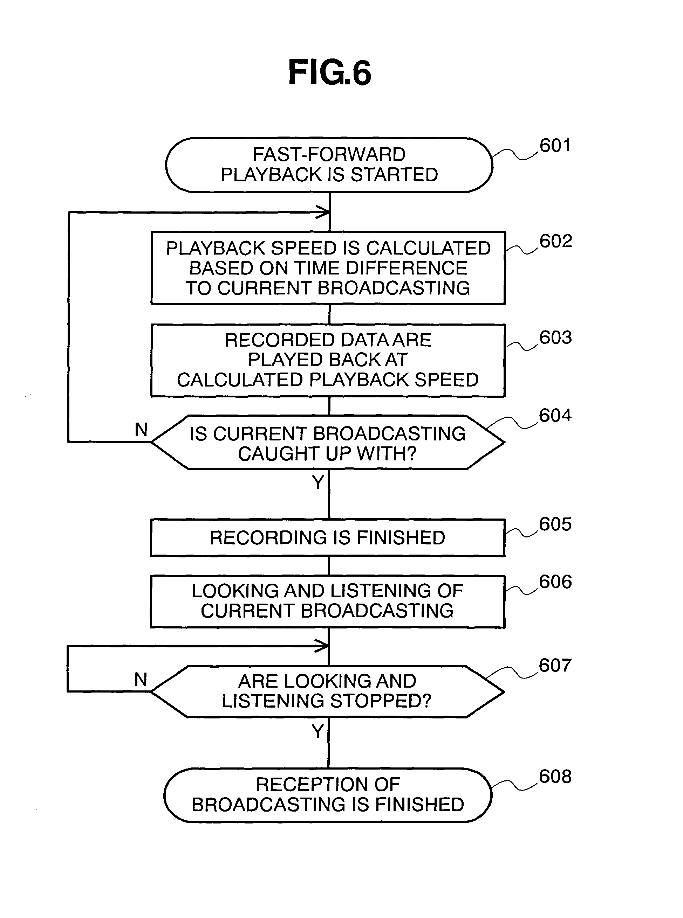

When the playback mode after the pause is the fast-forward playback mode in the step 208, processing is shifted to processing of fast-forward playback of data that have been recorded while the current broadcasting is recorded (step 214). Detail of the fast-forward playback processing is described later using Fig. 6.

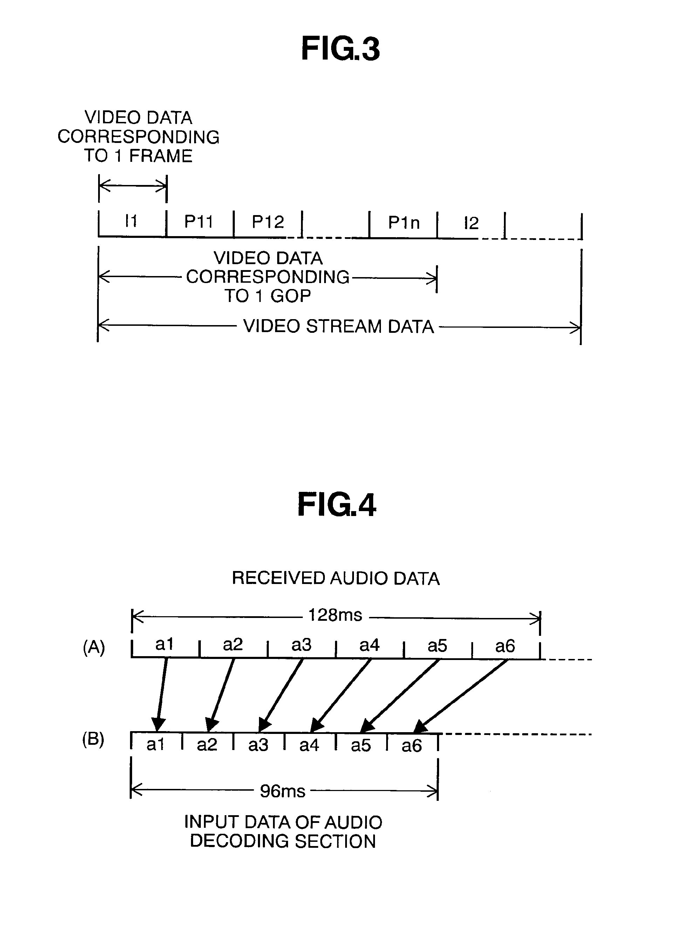

Here, the fast-forward playback is described. Fig. 3 is a view showing a format of compressed video data, which shows an aspect that the entire video stream is divided into a plurality of data blocks in units of GOP (Group Of Pictures).

In a compression method of video data according to a simple profile of the MPEG4 (Moving Pictures Expert Group 4: a compression coding technique of data containing moving pictures and audio sound standardized by International Organization for Standardization (ISO/IEC14496)) standard, 1 GOP includes an I picture (Intra Picture) that can independently generate an image frame without having any other reference image, and a plurality of P pictures (Predictive Pictures) that generate image frames with reference to reference images in the front.

While the reference image is necessary for independently generating the P picture, since the reference image is not necessary for the I picture, the I picture can be played back independently, and only the I pictures are sequentially displayed, thereby fast-forward playback of the video stream can be carried out at any optional playback speed. In the embodiment, all the I pictures or I pictures for every several I pictures are displayed with an interval of fixed time, so that the fast-forward playback of the video stream is performed.

Fig. 4 is a view for explaining a principle of realizing fast-forward playback of an audio stream by increasing sampling frequency during playback.

Audio data include a plurality of audio frames, and 1 audio frame includes data of 1024 samples. When sampling frequency is 48 kHz, duration (playback duration) during which 1 audio frame can be played back is 21.3 ms (1024 samples/48 kHz). Here, the sampling frequency during playback is increased to 64 kHz, duration during which 1 audio frame can be played back is 16 ms (1024 samples/64 kHz), and consequently playback can be performed at 1.33 times speed (64 kHz/48 kHz = 21.3 ms/16 ms). The sampling frequency during playback is optionally increased, thereby playback can be performed at any optional speed.

Fig. 4 shows that playback duration of 6 audio frames that have been received is 128 ms ((1024 samples/48 kHz)x6), and playback duration of 6 audio frames of which the sampling frequency has been increased to 64 kHz during playback is 96 ms ((1024 samples/64 kHz) x6). Audioplayback speed is 1.33 times speed (64 kHz/48 kHz). However, when the sampling frequency during playback is increased, audio frequency is increased in playback compared with in recording, resulting in an audio sound having extremely discomfortable sense.

In the embodiment, when the audio stream including the plurality of audio frames that have been received is inputted into the audio decoding section 112, audio frames are appropriately thinned from the plurality of audio frames, thereby fast-forward audio playback is performed.

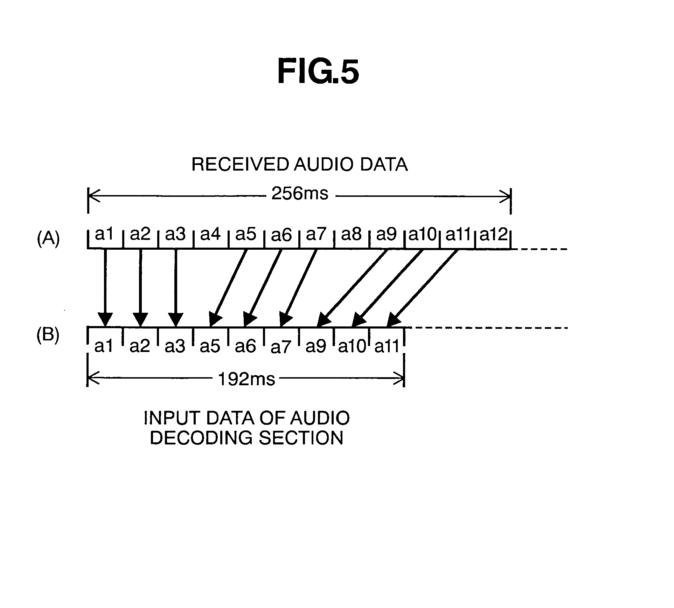

Fig. 5 shows an aspect that 12 audio frames that have been received are inputted into the audio decoding section 112 while 1 audio frame is thinned for every 4 audio frames. From the received 12 audio frames, 1 audio frame is thinned for every four audio frames, and consequently 9 audio frames are inputted into the audio decoding section 112. As a result, while playback duration of the received 12 audio frames is 256 ms ((1024 samples/48 kHz)x12), 9 audio frames are given to the audio decoding section 112, and playback duration of the audio frames is 192 ms ((1024 samples/48 kHz)x9). Audio playback speed is 1.33 times speed (256 ms/192 ms).

In this way, according to the embodiment, since audio sampling frequency during playback is not different from that during recording, playback of audio sound without the sense of discomfort can be performed. Since the audio streams are thinned, it is feared that noise may be generated and clearness may be somewhat reduced at places where the audio frames are thinned, however, a thinning method in such a level that one audio frame is thinned for every four audio frames is practically not problematic for practically played audio sound.

Table 1 is an example of control data showing a relationship between a thinning level in the case of catching up with current broadcasting, and playback speed, playback speed depending on time difference to current broadcasting, and duration. Such control data as shown in Table 1 are stored in the memory section 107, and the control section 101 controls playback speed based on the control data. For example, when audio data are played back from a state of a delay of 10 minutes (600 seconds), playback is started at 1.3333 times speed, and when audio data are played back from a state of a delay of 5 minutes (300 seconds), playback is started at 1.2308 times speed.

Table 1

| No. | Thinning level | Playback speed (N times speed) | Rate until next playback speed | Determination of playback speed depending on time difference (sec) | Duration (sec) |
|---|---|---|---|---|---|
| 1 | Not thinning | 1.0000 | 1.0294 | | |
| 2 | 1 frame for every 35 frames | 1.0294 | 1.0286 | less than 12 | |
| 3 | 1 frame for every 18 frames | 1.0588 | 1.0232 | 12 to less than 30 | |
| 4 | 1 frame for every 13 frames | 1.0833 | 1.0256 | 30 to less than 56 | |
| 5 | 1 frame for every 10 frames | 1.1111 | 1.0286 | 56 to less than 93 | |
| 6 | 1 frame for every 8 frames | 1.1429 | 1.0208 | 93 to less than 137 | |
| 7 | 1 frame for every 7 frames | 1.1667 | 1.0286 | 137 to less than 191 | 312 |
| 8 | 1 frame for every 6 frames | 1.2000 | 1.0256 | 191 to less than 255 | |
| 9 | 3 frame for every 16 frames | 1.2308 | 1.0292 | 255 to less than 330 | |
| 10 | 4 frame for every 19 frames | 1.2667 | 1.0263 | 330 to less than 416 | |
| 11 | 3 frame for every 13 frames | 1.3000 | 1.0256 | 416 to less than 512 | |
| 12 | 1 frame for every 4 frames | 1.3333 | | 512 or more | |

In the example, there are 11 kinds of playback speed from 1.3333 times speed where 1 frame is thinned for every 4 frames to 1.0294 times speed where 1 frame is thinned for every 35 frames, in addition to 1.0 times speed where any audio frames are not thinned.

The audio frames are thinned, for example, in the following way. When 3 frames are thinned for every 16 audio frames in No. 9, 1 audio frame is thinned in first 5 audio frames, then 1 audio frame is further thinned in next 6 audio frames, and then 1 audio frame is still further thinned in next 5 audio frames. In the case of playback speed in No. 10, 1 audio frame is thinned in first 5 audio frames, then 1 audio frame is further thinned in next 5 audio frames, and then 1 audio frame is further thinned in next 5 audio frames, and then 1 audio frame is still further thinned in next 5 audio frames. In the case of playback speed in No. 11, 1 audio frame is thinned in first 4 audio frames, then 1 audio frame is further thinned in next 4 audio frames, and then 1 audio frame is still further thinned in next 5 audio frames.

When first delay time of 10 minutes (600 seconds), 11 stages of playback speed, and duration T (sec) in each playback speed are assumed to be given, since the total sum of delay time and duration is equal to the total sum of products of respective stages of playback speed multiplied by duration, equation (1) is established.

$$600+T×11=T×\Sigma(1.0294+\cdots+1.3333) \qquad \cdots(\text{equation 1})$$

From the equation (1), duration T (sec) for each playback speed is as follows.

$$T=600/(\Sigma(1.0294+\cdots+1.3333)-11)$$

$$=600/(12.9230-11)$$

$$=312 \qquad\qquad \cdots(\text{equation 2})$$

Time for catching up is 3432 sec (about 57 min) from (equation 3).

$$312\times11=3432 \quad \cdots \quad (\text{equation 3})$$

Since human sensibility has a property that even if the number of stages of change is the same, the change is hardly sensed in the case that a rate of change is constant compared with the case that a range of change is constant, a thinning level is adjusted such that a rate of change in playback speed is approximately constant (2.08% to 2.94%) in Table 1.

While playback speed is changed in 11 kinds of levels in addition to 1.0 times speed in Table 1, it is not restrictive, and playback may be performed at 1.5 times speed where 1 frame is thinned for every 3 frames, or 2.0 times speed where 1 frame is thinned for every 2 frames. Moreover, the thinning level may be changed finely compared with the example shown in Table 1. In this case, since the playback speed is changed more smoothly, a sense of discomfort of a user due to change in speed can be reduced. Conversely, when the thinning level is controlled more roughly, since the number of controlling the playback speed is decreased, load on a control program can be reduced. However, in order to restrain the load on the control program while reducing the sense of discomfort of the user, the rate of change in playback speed is preferably set to be 2.08% to 2.94% as the example of Table 1.

While duration for each playback speed is made constant in the example of Table 1, the duration may be changed for each playback speed. For example, the duration may be lengthened with increase in playback speed, so that time for catching up with current broadcasting may be reduced.

In the example of Table 1, when time difference to current broadcasting exceeds 512 sec, playback is performed at 1.333 times speed until time difference reaches 512 sec, however, when the time difference exceeds, for example, 10 min (600 sec), playback may be performed at 1.5 times speed where 1 frame is thinned for every 3 frames, or 2.0 times speed where 1 frame is thinned for every 2 frames. By performing control in this way, time for catching up with current broadcasting can be reduced.

A relational expression indicating a relationship between delay time, and the number of stages of playback speed and duration at each playback speed may be stored in the memory section 107 instead of control data, so that the control section 101 calculates the playback speed based on the relational expression.

In the example, when video playback speed is changed in accordance with audio playback speed, a time interval of video frames outputted into the display section 111 is changed. For example, when the number of frames to be displayed for 1 sec is assumed to be 15, the time interval of the video frames is 66.66ms (1 sec/15) at 1.0 times speed (standard state). Playback is performed with the time interval of the video frames being shortened, by which video playback speed can be increased. Time intervals of video frames corresponding to respective kinds of audio playback speed in Table 1 are shown in Table 2.

Table 2

| No. | Thinning level | Audio playback speed (N times speed) | Time interval of video frames (ms) |
|-----|----------------|--------------------------------------|------------------------------------|
| 1 | No thinning | 1.0000 | 66.66 |
| 2 | 1 frame for every 35 frames | 1.0294 | 64.76 |
| 3 | 1 frame for every 18 frames | 1.0588 | 62.96 |
| 4 | 1 frame for every 13 frames | 1.0833 | 61.54 |
| 5 | 1 frame for every 10 frames | 1.1111 | 60.00 |
| 6 | 1 frame for every 8 frames | 1.1429 | 58.33 |
| 7 | 1 frame for every 7 frames | 1.1667 | 57.14 |

(continued)

| No. | Thinning level | Audio playback speed (N times speed) | Time interval of video frames (ms) |
|---|---|---|---|
| 8 | 1 frame for every 6 frames | 1.2000 | 55.56 |
| 9 | 3 frame for every 16 frames | 1.2308 | 54.17 |
| 10 | 4 frame for every 19 frames | 1.2667 | 52.63 |
| 11 | 3 frame for every 13 frames | 1.3000 | 51.28 |
| 12 | 1 frame for every 4 frames | 1.3333 | 50.00 |

Fig. 6 is a flowchart showing a processing procedure of fast-forward playback of data that have been recorded while recording current broadcasting in the step 214 of Fig. 2.

When fast-forward playback is started (step 601), the control section 101 detects time difference between time at a point of recording and time of current broadcasting, and calculates playback speed using the control data or the relational expression stored in the memory section 107 (step 602), and then plays back data that have been recorded at a calculatedplayback speedwhile continuing recording (step 603).

The control section 101 determines whether the time at the point of recording (time when recording data that are played back were recorded) corresponds to time of current broadcasting (step 604). Processes of the steps 602 and 603 are sequentially repeated until the time at the point of recording corresponds to the time of current broadcasting (until catching up with the current broadcasting). Playback speed is gradually decreased during that, and sequentially approaches 1.0 times speed. When the time at which recording data that are played back were recorded corresponds to the time of the current broadcasting, recording is finished (step 605), and the current broadcasting that is received is outputted to the display section 111 and the audio output section 113 (step 606).

When looking and listening are stopped during looking and listening of broadcasting (step 607), the control section 101 finishes reception of broadcasting (step 608).

In the embodiment, since control is performed such that the rate of change in playback speed is approximately constant, the sense of discomfort felt by the user in the boundary when fast-forward playback is changed into current playback can be mitigated.

Table 3 shows an example of control data in the case that sampling frequency during playback is also changed concurrently with the playback speed such that playback speed can be continuously changed.

Table 3

| No. | Thinning level | Playback speed (N times speed) | Rate until next playback speed | Sampling frequency until next playback speed (kHz) |
|---|---|---|---|---|
| 1 | No thinning | 1.0000 | 1.0294 | 49.412 |
| 2 | 1 frame for every 35 frames | 1.0294 | 1.0286 | 49.371 |
| 3 | 1 frame for every 18 frames | 1.0588 | 1.0232 | 49.111 |
| 4 | 1 frame for every 13 frames | 1.0833 | 1.0256 | 49.231 |
| 5 | 1 frame for every 10 frames | 1.1111 | 1.0286 | 49.371 |
| 6 | 1 frame for every 8 frames | 1.1429 | 1.0208 | 49.000 |
| 7 | 1 frame for every 7 frames | 1.1667 | 1.0286 | 49.371 |
| 8 | 1 frame for every 6 frames | 1.2000 | 1.0256 | 49.231 |
| 9 | 3 frame for every 16 frames | 1.2308 | 1.0292 | 49.400 |

(continued)

| No. | Thinning level | Playback speed (N times speed) | Rate until next playback speed | Sampling frequency until next playback speed (kHz) |
|---|---|---|---|---|
| 10 | 4 frame for every 19 frames | 1.2667 | 1.0263 | 49.263 |
| 11 | 3 frame for every 13 frames | 1.3000 | 1.0256 | 49.231 |
| 12 | 1 frame for every 4 frames | 1.3333 | | |

For example, when playback speed is changed from 1.333 times speed to 1.300 times speed, frequency is temporally changed from 48 kHz that is original frequency to 49.231 kHz, so that the playback speed is made to be 1.333 times speed. Then, the sampling frequency is gradually changed from 49.231 kHz to 48 kHz, thereby playback speed is continuously shifted to 1.300 times speed. The sampling frequency during playback is gradually changed in this way, by which audio playback speed can be continuously changed to 1.0 times speed.

In the example of Table 3, to avoid obstacle in a sense of hearing, a pitch of playback speed is set such that the rate of change in sampling frequency is at most 2.973% that is half the $2^{**}(1/12)$ =1.05946 times (a rate of change of 5.946%) as a pitch of a sound (frequency) to a next scale (half tone) in the equal temperament scale.

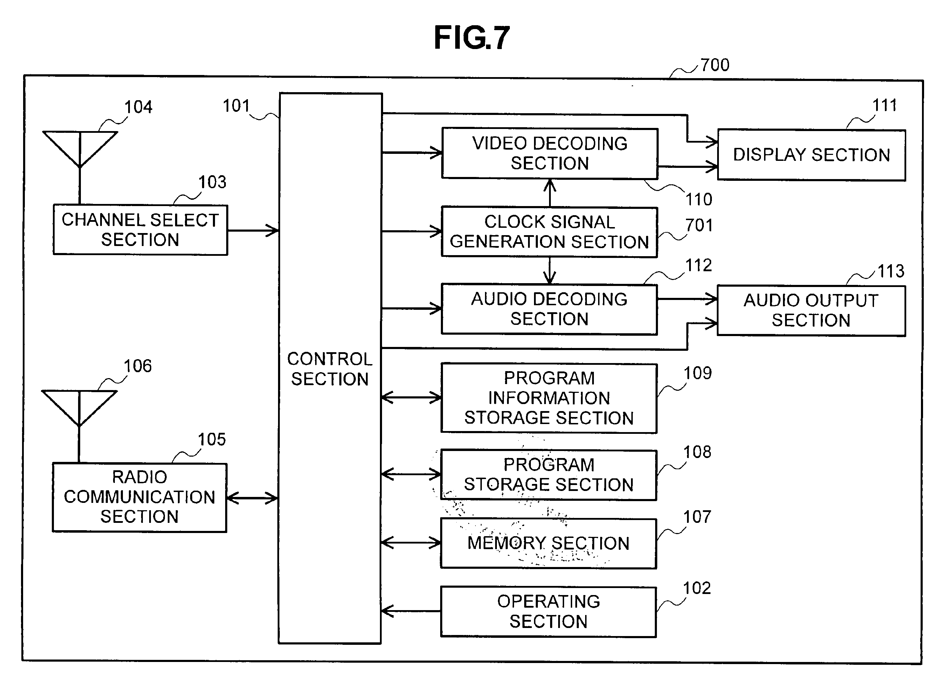

Fig. 7 is a block diagram showing an example of an internal configuration of a digital broadcasting receiving device 700 added with a function of changing the sampling frequency. In Fig. 7, the same items as in Fig. 1 are marked with the same signs.

The control section 101 controls a clock signal generation section 701 so that a specified sampling frequency is generated from the clock signal generation section 701 and supplied to the audio decoding section 112. Moreover, the clock signal generation section 701 provides a clock signal for determining operational frequency of the video decoding section 110, so that the control section 101 can control the clock signal generation section 701 to change the operational frequency of the video decoding section 110.

In the embodiment, the operational frequency of the video decoding section 110 is increased by using such a function, thereby processing capability of the video decoding section 110 is improved, and consequently fast-forward playback is realized, which is not playback of only the I pictures, but playback that displays all the frames including P pictures. It will be obvious that when the video decoding section 110 has originally sufficient processing capability, the fast-forward playback can be realized without increasing the operational frequency of the video decoding section 110.

While video playback speed is changed in accordance with audio playback speed in the embodiment, the audio playback speed may be changed in accordance with video playback speed.

While audio frames are thinned when data are inputted into the audio decoding section to reduce load on the audio decoding section in the embodiment, the thinning can be realized by thinning PCM (Pulse code modulation) data generated when data are outputted from the audio decoding section. In this case, while the load on the audio decoding section is not reduced, the same advantage is given in a sense of changing the playback speed.

While the digital broadcasting includes terrestrial digital broadcasting and digital broadcasting via an artificial satellite, they are the same in the light of digital broadcasting through wireless transmission, and therefore the embodiments of the invention can be applied to either of them. Moreover, it is obvious that the embodiments of the invention can be applied even to digital broadcasting through a wired cable television.

As described hereinbefore, a digital broadcasting receiving device and a digital information receiving device, in which a fast-forward playback function can be improved, and a playback method can be provided.

The foregoing invention has been described in terms of preferred embodiments. However, those skilled, in the art will recognize that many variations of such embodiments exist. Such variations are intended to be within the scope of the present invention and the appended claims.

**Claims**

1. A digital broadcasting receiving device, comprising;

    a receiver that receives digital broadcasting containing an audio stream,
    a memory that stores digital broadcasting received by the receiver,

an audio decoder that decodes an audio stream received by the receiver or an audio stream stored in the memory, and
a controller that performs control such that when an instruction of pause of looking and listening of the digital broadcasting is inputted, the digital broadcasting is stored by the memory, and when an instruction of canceling the pause is inputted, while the digital broadcasting is stored, fast-forward playback of the digital broadcasting stored in the memory is performed with playback speed of the digital broadcasting being changed in a plurality of stages;

wherein when the playback speed of the digital broadcasting stored in the memory is changed, the controller inputs audio frames of the audio stream stored in the memory into the audio decoder with a thinning level of the audio frames being changed.

2.   The digital broadcasting receiving device according to claim 1, wherein when the playback speed of the digital broadcasting stored in the memory is changed, the controller changes the thinning level of the audio frames of the audio stream such that a rate of change in the playback speed is approximately constant.

3.   The digital broadcasting receiving device according to claim 1, wherein when the controller changes the playback speed of the digital broadcasting stored in the memory, the controller changes sampling frequency of the audio decoder.

4.   The digital broadcasting receiving device according to claim 1, wherein the controller changes the playback speed of the digital broadcasting stored in the memory depending on time difference between stored time of the digital broadcasting that is subjected to fast-forward playback and current time.

5.   The digital broadcasting receiving device according to claim 1, wherein the digital broadcasting contains a video stream, and the digital broadcasting receiving device includes a display to which the video stream is outputted, when the controller performs fast-forward playback of the digital broadcasting stored in the memory with playback speed of the digital broadcasting being changed in the plurality of stages, the controller changes a time interval of the video stream outputted to the display.

6.   A digital information playback method, comprising the steps of;

receiving digital information containing an audio stream,
storing received digital information when an instruction of pause of looking and listening of the digital information is inputted, in the case that digital information is received,
performing fast-forward playback of stored digital information with playback speed of the digital information being changed in a plurality of stages while storing the digital information, when an instruction of canceling the pause is inputted, and
decoding audio frames of the audio stream with a thinning level of the audio frames being changed when the playback speed of the stored digital information is changed.

7.   The digital information playback method according to claim 6, wherein when the playback speed of the stored digital information is changed, the thinning level of the audio frames of the audio stream is changed such that a rate of change in the playback speed is approximately constant.

8.   A digital information receiving device, comprising;

a receiver that receives digital information containing an audio stream,
a memory that stores digital information received by the receiver,
an audio decoder that decodes an audio stream received by the receiver or an audio stream stored in the memory, and
a controller that performs control such that when an instruction of pause of looking and listening of the digital information is inputted, the digital information is stored by the memory, and when an instruction of canceling the pause is inputted, while the digital information is stored, fast-forward playback of the digital information stored in the memory is performed with playback speed of the digital information being changed in a plurality of stages;

wherein when the playback speed of the digital information stored in the memory is changed, the controller inputs audio frames of the audio stream stored in the memory into the audio decoder with a thinning level of the audio frames being changed.

# FIG.1

EP 1 739 676 A1

# FIG.2

201 RECEPTION OF BROADCASTING IS STARTED

202 LOOKING AND LISTENING OF BROADCASTING

203 IS RECEPTION OF BROADCASTING STOPPED?
— Y → 204 RECEPTION OF BROADCASTING IS FINISHED
— N

205 ARE LOOKING AND LISTENING STOPPED?
— N
— Y

206 RECORDING IS STARTED

207 IS SUSPENSION CANCELED?
— N
— Y

208 ARE LOOKING AND LISTENING PAUSED?
TIME SHIFT PLAYBACK
FAST-FORWARD PLAYBACK

209 RECORDING DATA ARE PLAYED BACK

214 FAST-FORWARD PLAYBACK

210 IS RECORDING STOPPED?
— N
— Y

211 RECORDING IS FINISHED

212 RECEPTION OF BROADCASTING IS FINISHED

213 PLAYBACK IS FINISHED

# FIG.3

VIDEO DATA
CORRESPONDING
TO 1 FRAME

| I1 | P11 | P12 | | P1n | I2 | |

VIDEO DATA
CORRESPONDING
TO 1 GOP

VIDEO STREAM DATA

# FIG.4

RECEIVED AUDIO DATA

128ms

(A) | a1 | a2 | a3 | a4 | a5 | a6 |

(B) | a1 | a2 | a3 | a4 | a5 | a6 |

96ms

INPUT DATA OF AUDIO
DECODING SECTION

# FIG.5

RECEIVED AUDIO DATA

|← —————————— 256ms —————————— →|

(A)  |a1 | a2 | a3 | a4 | a5 | a6 | a7 | a8 | a9 |a10| a11|a12| - - - - -

(B)  |a1 | a2 | a3 | a5 | a6 | a7 | a9 |a10| a11| - - - - -

|← —————————— 192ms —————————— →|

INPUT DATA OF AUDIO
DECODING SECTION

# FIG.6

FAST-FORWARD
PLAYBACK IS STARTED — 601

PLAYBACK SPEED IS CALCULATED
BASED ON TIME DIFFERENCE
TO CURRENT BROADCASTING — 602

RECORDED DATA ARE
PLAYED BACK AT
CALCULATED PLAYBACK SPEED — 603

N — IS CURRENT BROADCASTING
CAUGHT UP WITH? — 604

Y

RECORDING IS FINISHED — 605

LOOKING AND LISTENING OF
CURRENT BROADCASTING — 606

N — ARE LOOKING AND
LISTENING STOPPED? — 607

Y

RECEPTION OF
BROADCASTING IS FINISHED — 608

# FIG.7

European Patent
Office

**EUROPEAN SEARCH REPORT**

Application Number

EP 06 25 3269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 692 213 A (GOLDBERG ET AL) 25 November 1997 (1997-11-25) * column 2, line 35 * * column 2, lines 53,54 * * column 3, lines 19-21 * * column 3, lines 43-46 * * column 5, lines 11-25 * * column 6, lines 7-9 * * column 6, lines 28-37 * * column 6, line 60 - column 7, line 21 * ----- | 1-8 | INV. G11B27/00 ADD. H04H1/00 |
| X | US 2003/072556 A1 (OKUJIMA KUNIHIRO ET AL) 17 April 2003 (2003-04-17) * paragraph [0033]; figure 1 * * paragraph [0045] * * paragraph [0036] * * paragraph [0011]; figures 11,13 * ----- | 1,8 | |
| A | US 6 088 313 A (TANAKA ET AL) 11 July 2000 (2000-07-11) * column 2, lines 29-40 * ----- | 1,8 | TECHNICAL FIELDS SEARCHED (IPC) G11B |

The present search report has been drawn up for all claims

| Place of search | Date of completion of the search | Examiner |
|---|---|---|
| The Hague | 25 September 2006 | TORCAL SERRANO, C |

EPO FORM 1503 03.82 (P04C01)

**ANNEX TO THE EUROPEAN SEARCH REPORT
ON EUROPEAN PATENT APPLICATION NO.**

EP 06 25 3269

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2006

| Patent document cited in search report | | Publication date | Patent family member(s) | | Publication date |
|---|---|---|---|---|---|
| US 5692213 | A | 25-11-1997 | DE<br>DE<br>EP<br>JP | 69423714 D1<br>69423714 T2<br>0660221 A1<br>7219970 A | 04-05-2000<br>27-07-2000<br>28-06-1995<br>18-08-1995 |
| US 2003072556 | A1 | 17-04-2003 | NONE | | |
| US 6088313 | A | 11-07-2000 | NONE | | |

**EP 1 739 676 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005189157 A
- JP 2006075861 A
- JP 2001094948 A